# FASCICULE DE BREVET EUROPEEN

(11) **EP 3 107 030 B1**
(45) Date de publication et mention de la délivrance du brevet: **24.07.2024**
(21) Numéro de dépôt: 16174441.2
(22) Date de dépôt: 14.06.2016
(51) Int. Cl.: G06F 21/72, H04L 9/40, G06Q 20/32, H04W 12/043, G06Q 20/34, H04W 4/00, H04W 12/04

(54) **PROCEDE DE DEPLOIEMENT D'UNE APPLICATION DANS UN DOMAINE SECURISE D'UN ELEMENT SECURISE**
VERFAHREN ZUR BEREITSTELLUNG EINER ANWENDUNG (APP) IN EINEM SICHERHEITSBEREICH EINES SICHEREN ELEMENTS
METHOD FOR DEPLOYING AN APPLICATION IN A SECURE DOMAIN IN A SECURE ELEMENT

(30) Priorité: 17.06.2015 FR 1555552
(43) Date de publication de la demande: 21.12.2016
(73) Titulaire: Idemia Identity & Security France, 92400 Courbevoie (FR)
(72) Inventeur: RATIER, Jean-Baptiste, 92130 ISSY-LES-MOULINEAUX (FR)
(74) Mandataire: Idemia

(56) Documents cités:
- EP-A1- 2 352 252
- EP-A1- 2 388 968
- SECRETARIAT@GLOBALPLATFORM: "White Paper GlobalPlatform's Proposition for NFC Mobile: Secure Element Management and Messaging", 30 April 2009 (2009-04-30), XP055270081, Retrieved from the Internet <URL:http://www.sicherungssysteme.net/fileadmin/GlobalPlatform_NFC_Mobile_White_Paper.pdf> [retrieved on 20160502]

## Description

La présente invention concerne l'exécution sécurisée d'application dans un terminal mobile de communication pour par exemple utiliser le terminal mobile comme un moyen d'authentification à des fins notamment d'accomplissement d'une opération de paiement, d'accès à un lieu ou bien encore de preuve de l'identité du propriétaire du mobile.

### ETAT DE LA TECHNIQUE

Il est connu d'utiliser des terminaux mobiles de télécommunication, comme des téléphones mobiles, pour effectuer des opérations sensibles nécessitant une authentification, telles que des opérations de paiement. Dans de telles opérations, le téléphone mobile joue le rôle d'une carte de paiement ou de crédit et échange des données avec le terminal de paiement des commerçants par une technologie sans fil de type communication par champ proche ou NFC (« Near Field Communication »). Le téléphone exécute une application de paiement mobile qui va assurer l'authentification de l'utilisateur comme le fait une carte de paiement ou de crédit classique.

On comprend que la faisabilité de ces opérations repose sur la certitude que les données et les applications de paiement mobiles ne peuvent être altérées ou modifiées par un fraudeur. A cette fin, les données et applications sensibles sont stockées, traitées ou exécutées par un élément sécurisé contenu dans le téléphone.

Un élément sécurisé (sa désignation anglaise « secure element » étant plus couramment utilisée) est un circuit électronique agencé pour contenir de manière sécurisée des applications et des données, exécuter les applications, et assurer un transfert sécurisé des données. L'élément sécurisé comprend un processeur et des moyens de mémorisation qui sont agencés pour résister à des manipulations en vue d'accéder sans autorisation aux applications et aux données. L'élément sécurisé est ainsi par exemple une carte à circuit intégré amovible (comme une carte SIM ou une carte SD) ou un circuit dédié soudé sur une carte électronique du téléphone mobile (l'élément sécurisé est alors dit « embedded » selon l'appellation anglaise la plus courante). L'élément sécurisé peut également être obtenu de manière logicielle en définissant au sein du processeur du téléphone une zone sécurisée (chiffrée) accessible au moyen d'une clé de déchiffrement.

Deux types d'entités doivent donc coopérer pour garantir cette sécurisation :
- le fournisseur (ou propriétaire) de l'élément sécurisé (couramment identifié par l'abréviation SEI de l'anglais « secure element issuer ») qui détient toutes les informations techniques permettant d'intervenir sur l'élément sécurisé et en assure le bon fonctionnement,
- les fournisseurs de service (couramment identifiés par l'abréviation SP de l'anglais « service provider »), tels que des organismes bancaires ou de crédit, qui fournissent les applications de paiement mobile et en assurent le bon fonctionnement, initient des requêtes de changement ou de mise à jour des applications, et commandent le blocage définitif ou la suspension de leur utilisation. L'élément sécurisé peut contenir plusieurs applications de paiement mobile, ou autres applications, associées chacune à un fournisseur de service ou à un compte de l'utilisateur auprès d'un fournisseur de service.

Pour que le fonctionnement soit sûr pour tous les acteurs, il est important de garantir que le fournisseur de l'élément sécurisé ne peut accéder directement à l'élément sécurisé et donc aux applications et données des fournisseurs de service. De la même manière, il est important de garantir que les fournisseurs de service ne peuvent accéder directement à l'élément sécurisé et donc aux applications et données des autres fournisseurs de service. A cette fin, le fournisseur de l'élément sécurisé interagit avec l'élément sécurisé via un premier serveur de confiance exécutant un premier programme gestionnaire et les fournisseurs de services interagissent avec l'élément sécurisé via un deuxième serveur de confiance exécutant un deuxième programme gestionnaire. Les programmes gestionnaires sont élaborés par des tiers de confiance et communiquent entre eux et, pour le premier, avec le fournisseur de l'élément sécurisé et, pour le deuxième, avec les fournisseurs de service. Le premier programme gestionnaire est agencé pour assurer la gestion des accès et de l'allocation des espaces mémoires et droits vis-à-vis de l'élément sécurisé (on parle de l'allocation d'un domaine sécurisé au sein de l'élément sécurisé). Le deuxième programme gestionnaire gère l'installation et le fonctionnement des applications dans les domaines sécurisés alloués par le premier programme gestionnaire.

La sécurisation repose sur des procédés de chiffrement et des échanges de clés entre les applications et les programmes gestionnaires.

L'utilisateur peut disposer de plusieurs applications de paiement mobile dans son élément sécurisé. Il est prévu un programme d'appel des applications de paiement mobile (ce programme d'appel forme une interface entre l'utilisateur et l'application de paiement mobile). Ce programme d'appel, par exemple celui proposé sous l'appellation GOOGLE WALLET par la société américaine GOOGLE, est exécuté par le processeur du téléphone, hors de l'élément sécurisé, et permet à l'utilisateur du téléphone de sélectionner l'application de paiement mobile à utiliser pour le paiement.

Le programme d'appel est autorisé à lancer l'exécution des applications de paiement mobile par l'élément sécurisé mais également à émettre vers les fournisseurs de service des requêtes de demande d'installation de nouvelles applications de paiement mobile à la demande de l'utilisateur du téléphone.

A la réception d'une telle requête, le fournisseur de service, la banque dans le présent exemple, vérifie l'éligibilité de l'utilisateur à ce service, c'est-à-dire qu'elle détermine si l'utilisateur dispose des ressources financières suffisantes pour disposer d'une application de paiement mobile. Le cas échéant, la banque renvoie au deuxième programme gestionnaire un accord d'éligibilité et les données nécessaires à la configuration de l'application de paiement mobile.

Le deuxième programme gestionnaire envoie alors au premier programme gestionnaire une requête demandant le déploiement d'une application de paiement mobile dans l'élément sécurisé. Le premier programme gestionnaire vérifie alors la compatibilité technique de l'application de paiement mobile avec l'élément sécurisé du téléphone en question. Le cas échéant, le premier programme gestionnaire envoie une confirmation de compatibilité au deuxième programme gestionnaire qui renvoie une requête de création d'un domaine sécurisé dans l'élément sécurisé du téléphone en question. Une fois le domaine sécurisé créé, le premier programme gestionnaire en informe le deuxième programme gestionnaire et lui envoie une clé d'accès audit domaine sécurisé. En parallèle de la création du domaine sécurisé, le programme d'installation de l'application de paiement mobile est préparé par le deuxième programme gestionnaire et envoyé au premier programme gestionnaire qui en vérifie le contenu technique. Le programme d'installation de l'application de paiement mobile est ensuite chargé, exécuté et personnalisé dans le domaine sécurisé de l'élément sécurisé. Une fois l'application de paiement mobile installée et configurée, le deuxième programme gestionnaire en informe la banque et l'utilisateur peut exécuter, via le programme d'appel, l'application de paiement mobile nouvellement installée.

L'ensemble des procédures de chargement, d'installation et de fonctionnement des applications sur les éléments sécurisés a été définie par une association dénommée GLOBALPLATFORM regroupant des industriels du secteur (voir par exemple le document « GlobalPlatform's proposition for NFC Mobile : Secure Element management and Messaging », White Paper, Avril 2009, publié par la société GlobalPlatform Inc.).

La mise en ceuvre de ces procédures demande de nombreux échanges de données successifs entre les différents acteurs impliqués, et l'élément sécurisé du téléphone. Il est ainsi formé une chaîne de transmission des données. Le programme d'appel n'intervient lui qu'au début du processus pour demander l'installation d'une application puis à la fin du processus pour lancer l'application. Comme tout échange de données entre les programmes gestionnaires, le fournisseur de services et le fournisseur d'éléments sécurisés demande l'ouverture d'un canal privé de communication (également appelé canal VPN), la division et la multiplication des échanges engendrent une lourdeur importante ralentissant le déploiement des applications de paiement mobile car il est nécessaire que tous les acteurs de la chaîne soient disponibles en même temps sans quoi les données sont bloquées, le canal privé de communication est fermé et devra être ultérieurement rouvert. Il en résulte que la mise en oeuvre de l'ensemble du processus est longue et coûteuse, l'avancement du processus étant conditionné par l'acteur le plus lent.

Le document EP-B-2352252 montre un exemple de mise en œuvre de la norme Global Platform Card Spécification.

Il est connu du document EP-A-2388968 un procédé de chargement d'une application dans une carte à circuit intégré. Ce procédé met en oeuvre un jeu de commandes couramment appelé STK (de l'anglais « SIM Application tool-kit ») et un serveur web pour pouvoir choisir une application à charger. Comme précédemment, l'échange de données entre les acteurs est effectué en mettant en place des relations directes entre les acteurs, ce qui peut engendrer des difficultés lorsque les acteurs ne sont pas disponibles en même temps. Le serveur web constitue en outre un acteur supplémentaire, complexifiant les échanges.

### OBJET DE L'INVENTION

Un but de l'invention est de proposer un procédé d'installation d'application dans un élément sécurisé qui soit plus simple et rapide tout en étant fiable et sécurisé.

### BREF EXPOSE DE L'INVENTION

A cet effet, on prévoit, selon l'invention, un procédé de déploiement d'une application dans un élément sécurisé d'un terminal de communication comportant une unité de traitement non sécurisé exécutant un programme d'appel des applications dans l'élément sécurisé. Le procédé comprend l'étape de transférer via au moins un réseau de communication des données entre un premier serveur de confiance associé à un fournisseur de l'élément sécurisé pour exécuter un premier programme de gestion de l'élément sécurisé, un deuxième serveur de confiance associé à au moins un fournisseur d'applications d'authentification pour exécuter un deuxième programme de gestion d'applications de l'élément sécurisé, et le terminal de communication, pour créer dans l'élément sécurisé un domaine sécurisé et y installer l'application. Le procédé comprend les étapes de :
- établir un premier échange de données entre le fournisseur d'application et le programme d'appel pour obtenir une autorisation d'installation de l'application,
- établir un deuxième échange de données entre le premier programme de gestion et le programme d'appel pour créer le domaine sécurisé dans l'élément sécurisé et transférer au programme d'appel une clé d'accès au domaine sécurisé,
- établir un troisième échange de données entre le deuxième programme de gestion et le programme d'appel pour transférer la clé d'accès au deuxième programme de gestion et interdire l'utilisation ultérieure de la clé d'accès par le programme d'appel pour accéder au domaine sécurisé,
- faire télécharger et installer l'application dans le domaine sécurisé par le deuxième programme de gestion.

Ainsi, le programme d'appel assure également la centralisation des flux de données entre les serveurs de confiance. L'ajout de cet intermédiaire fluidifie les échanges de données car il est globalement plus disponible que les serveurs de confiance de sorte qu'il est plus facile d'échanger des données entre chacun des serveurs de confiance d'une part et le programme d'appel d'autre part. En outre, seules deux sessions d'échanges de données sont ouvertes entre le programme d'appel et les serveurs de confiance : une première session d'échange de données avec le premier programme de gestion, puis une deuxième session d'échange de données avec le deuxième programme de gestion. Les serveurs de confiance ne dialoguent pas directement entre eux.

Le programme d'appel est un logiciel ou une application qui s'exécute sur le terminal de communication (tablette, téléphone mobile, un ordinateur...) relié au réseau de communication par exemple au réseau Internet.

Le programme d'appel peut être mis à disposition par :
- un fournisseur de l'élément sécurisé disposant de l'accès à l'élément sécurisé incorporé au sein du terminal ou connecté au terminal ;
- un fournisseur d'application qui propose un service à l'utilisateur ;
- un constructeur de terminal ; ou
- un fournisseur d'un programme informatique d'exploitation du terminal.

Le programme d'appel est agencé selon l'invention notamment pour :
- recevoir une demande, en provenance d'un fournisseur d'application, pour la création d'un domaine sécurisé ;
- ouvrir une connexion sécurisée avec le premier programme de gestion pour transférer la clef et réaliser la transaction de création du domaine sécurisé sur l'élément sécurisé ;
- assurer que la transaction de création du domaine sécurisé sur l'élément sécurisé est terminée ;
- récupérer la clef d'accès au Secure Domain avec si possible le partage d'une clef d'encryptage de cette dernière ;
- ouvrir une connexion sécurisée avec le fournisseur d'application pour partager la clef d'accès au domaine sécurisé ;
- assurer que la transaction de chargement de l'application dans le domaine sécurisé est terminée.

Une fois l'application installée, le programme d'appel peut être agencé pour assurer le lien avec un opérateur pour utiliser l'application dans l'élément sécurisé, par exemple pour assurer un paiement sans contact ou encore jouer le rôle de terminal de paiement lors d'un paiement via le réseau Internet.

L'invention est définie par la revendication indépendante attachée. Des exemples d'implémentation sont données par les revendication dépendantes.

### BREVE DESCRIPTION DES FIGURES

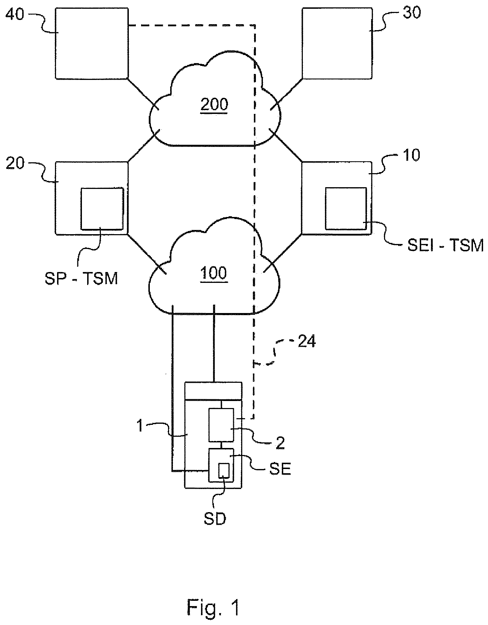

Il sera fait référence à la figure unique annexée illustrant la mise en œuvre du procédé de l'invention.

### DESCRIPTION DETAILLEE DE L'INVENTION

L'invention est décrite à titre d'exemple à une application de paiement mobile, c'est-à-dire que le téléphone mobile est utilisé comme une carte de paiement.

En référence à la figure, le téléphone mobile utilisé pour la mise en œuvre de l'invention, désigné en 1, est un téléphone GSM de type *smartphone* comprenant :
- un circuit de traitement non sécurisé, symbolisé en 2, comportant un processeur (le processeur principal du téléphone) et des mémoires pour exécuter un programme d'exploitation (couramment appelé O.S.) et des applications diverses (téléphonie, connexion au réseau INTERNET, messagerie, gestion de fichiers, appareil photographique, géolocalisation, calendrier, radio, bloc-notes, calculatrice, jeux...),
- un élément sécurisé (SE) comportant des moyens de traitement (un processeur) et une mémoire qui ne sont utilisables qu'en disposant d'une clé. L'élément sécurisé est susceptible de recevoir des messages courts (couramment appelés SMS) sans que ceux-ci ne passent par le circuit de traitement non sécurisé 2. L'élément sécurisé est ici un circuit soudé à la carte électronique du téléphone mobile 1.

La mémoire du circuit de traitement non sécurisé (l'expression « non sécurisé » est ici utilisée par opposition à l'élément sécurisé) contient un programme d'appel qui est exécuté par le processeur principal du téléphone et est agencé pour demander au processeur de l'élément sécurisé d'exécuter des applications de paiement mobile qui sont, elles, contenues dans la mémoire de l'élément sécurisé.

Le programme d'appel fournit à l'utilisateur la possibilité de choisir une des applications de paiement mobile contenu dans l'élément sécurisé et de lancer cette application. Le programme d'appel détient à cette fin une clé qui lui permet d'appeler chacune des applications de paiement mobile qu'aura choisie l'utilisateur. L'appel des applications de paiement mobile est connu en lui-même et ne sera pas détaillé ici.

Conformément à l'invention, le programme d'appel est également agencé pour jouer un rôle centralisateur dans les échanges de données nécessaires à l'installation d'une application de paiement mobile dans l'élément sécurisé comme cela sera décrit dans la suite.

Les applications de paiement mobile sont des applications d'authentification connues en elles-mêmes et ne seront pas plus détaillées ici.

Le téléphone mobile 1 comprend de manière classique des moyens de sa liaison à un réseau de communication sans fil, ici le réseau GSM symbolisé en 100.

A ce réseau sont également reliés, un premier serveur de confiance 10 et un deuxième serveur de confiance 20.

Le premier serveur de confiance 10 est relié via le réseau INTERNET 200 à des serveurs 30 de fournisseurs ou de propriétaires des éléments sécurisés (un seul de ces serveurs est ici représenté). Le premier serveur de confiance 10 héberge et exécute un premier programme gestionnaire d'éléments sécurisés. Ce programme est couramment appelé SEI-TSM (de l'anglais « Secure Element Issuer - Trusted Service Manager).

Le deuxième serveur de confiance 20 est relié via le réseau INTERNET 200 à des serveurs 40 de fournisseurs de service (comme des banques et des organismes de crédit - un seul de ces serveurs est ici représenté). Le deuxième serveur de confiance 20 héberge et exécute un deuxième programme gestionnaire d'applications de paiement mobile. Ce programme est couramment appelé SP-TSM (de l'anglais « Service Provider - Trusted Service Manager).

Le programme d'appel est relié au serveur 40 par une liaison GSM ou internet (au moins 3G) de sorte que le programme d'appel puisse recevoir un ordre de lancement émis par le serveur 40 (cette liaison 24 est symbolisée en trait pointillé sur la figure).

Le procédé de l'invention vise au déploiement d'une application d'authentification dans l'élément sécurisé SE du téléphone mobile 1.

Ce procédé met en oeuvre le transfert, via le réseau de communication GSM 100, de données entre le premier serveur de confiance 10, le deuxième serveur de confiance 20, et le téléphone 1 pour créer dans l'élément sécurisé SE un domaine sécurisé SD et y installer l'application d'authentification.

Le procédé selon l'invention comprend les étapes de :
- établir un premier échange de données entre l'un des serveurs 40 et le programme d'appel pour transférer au programme d'appel une autorisation d'installation de l'application,
- établir un deuxième échange de données entre le premier programme gestionnaire SEI-TSM et le programme d'appel pour créer le domaine sécurisé SD dans l'élément sécurisé SE et transférer au programme d'appel une clé d'accès au domaine sécurisé SD,
- établir un troisième échange de données entre le deuxième programme gestionnaire SP-TSM et le programme d'appel pour transférer la clé d'accès au deuxième programme gestionnaire SP-TSM et

- interdire l'utilisation ultérieure de la clé d'accès par le programme d'appel pour accéder au domaine sécurisé SD,
- faire télécharger et installer l'application dans le domaine sécurisé SD par le deuxième programme gestionnaire SP-TSM.

Lors du premier échange de données :
- le programme d'appel émet, à la demande de l'utilisateur, une requête demandant l'installation de la nouvelle application de paiement mobile. La requête est envoyée par le programme d'appel via la liaison 24 directement au serveur 40 du fournisseur de service concerné sous forme d'un message SMS (ceci va aussi permettre au programme d'appel de recevoir depuis le serveur 40 l'identification du premier programme gestionnaire SEI-TSM à qui il va devoir ultérieurement s'adresser lors du deuxième échange de données décrit plus loin) ;
- le fournisseur de service vérifie que l'utilisateur remplit les conditions pour se voir attribuer l'application de paiement mobile (moyens financiers suffisants par exemple) et envoie sa réponse au deuxième programme gestionnaire SP-TSM. Si la réponse est favorable, elle est accompagnée de données de personnalisation de l'application de paiement mobile ;
- le deuxième programme gestionnaire SP-TSM transmet la réponse via le réseau GSM 100 au programme d'appel.

Lors du deuxième échange de données :
- le programme d'appel envoie une requête demandant la création du domaine sécurisé SD dans l'élément sécurisé SE, la requête est envoyée par le programme d'appel au premier serveur 10 via le réseau GSM 100 et comprend un identifiant du téléphone mobile et un identifiant de l'application de paiement mobile à installer ;
- le premier programme gestionnaire SEI-TSM vérifie la compatibilité technique de l'application de paiement mobile avec l'élément sécurisé SE du téléphone mobile 1. Le premier serveur 10 héberge une base de données mettant en relation des identifiants d'applications avec des caractéristiques techniques de celles-ci et une base de données mettant en relation des identifiants de téléphones mobiles avec des caractéristiques techniques de ceux-ci. En cas de besoin, le premier programme gestionnaire SEI-TSM transmet la requête au serveur 20 du fournisseur ou propriétaire de l'élément sécurisé concerné via le réseau INTERNET 200 ;
- si l'application est compatible avec l'élément sécurisé SE, le premier programme gestionnaire SEI-TSM envoie via le réseau GSM 100 un message court SMS directement à l'élément sécurisé SE pour y créer le domaine sécurisé SD ;
- une fois le domaine sécurisé SD créé, le premier programme gestionnaire SEI-TSM transmet au programme d'appel la clé d'accès au domaine sécurisé SD. La réponse est transmise via le réseau GSM 100.

Lors du troisième échange de données, le programme d'appel transfère la clé d'accès au deuxième programme gestionnaire SP-TSM.

Le deuxième programme gestionnaire SP-TSM prépare un programme d'installation de l'application et de sa configuration avec les données de personnalisation. Parmi les données de personnalisation de l'application de paiement mobile, se trouvent par exemple un nom d'utilisateur, une date limite de validité, un plafond de paiement...

Le deuxième programme gestionnaire SP-TSM interdit l'utilisation de la clé d'accès par un autre que lui pour accéder au domaine sécurisé SD. L'interdiction d'utilisation résulte ici d'une modification de la clé par le deuxième programme de gestion SP-TSM dès réception de la clé. Ainsi, à aucun moment le propriétaire de l'élément sécurisé n'a accès aux données sécurisées envoyées par le fournisseur d'accès et stockées dans l'élément sécurisé.

Grâce à la clé d'accès, le deuxième programme gestionnaire SP-TSM télécharge le programme d'installation dans le domaine sécurisé SD de l'élément sécurisé SE qui exécute le programme d'installation de sorte que l'application est installée dans le domaine sécurisé SD.

Bien entendu, l'invention n'est pas limitée aux modes de réalisation décrits mais englobe toute variante entrant dans le champ de l'invention telle que définie par les revendications.

En particulier, bien que l'invention ait été décrite dans le cadre d'une application de paiement mobile, l'invention peut concerner également une application d'authentification en vue de déverrouiller une serrure, par exemple pour accéder à un lieu ou utiliser un véhicule.

L'élément sécurisé peut être un élément embarqué, une carte mémoire sécurisée de type SMC, ou une carte mémoire de type UICC. L'élément sécurisé peut également être de type logiciel correspondant à l'environnement de l'association GLOBALPLATFORM nommé « Trusted Execution Environment ».

Avant d'être transférée au programme d'appel, la clé d'accès au domaine sécurisé peut être chiffrée par le premier programme de gestion avec une clé intermédiaire de chiffrement connue du deuxième programme de gestion. Le deuxième programme de gestion n'est donc plus obligé de modifier la clé d'accès après le premier accès au domaine sécurisé. L'environnement de l'association GLOBALPLATFORM incorpore un tel processus de chiffrement.

Dans ce cadre de changement de clé, l'invention est également applicable à tout environnement similaire à celui mise en place par l'association GLOBALPLATFORM.

L'invention est applicable avec un terminal de communication comme une tablette communicante ou un mi-croordinateur ou tout autre objet connecté comportant un élément sécurisé matériel ou logiciel.

D'autres réseaux que ceux mentionnés peuvent être utilisés pour la mise en oeuvre de l'invention.

On pourrait, de plus, mettre en place une possibilité de partager un secret entre le programme d'appel et le serveur 40 pour que l'utilisateur soit bien reconnu (on évite de la sorte les tentatives de fraude consistant à subtiliser un premier code PAN d'une première carte SIM pour charger une deuxième carte avec un deuxième code PAN dérivé du premier code sur un téléphone portable). Ainsi, il est possible de mettre, dans ce premier échange de données, un secret entre le serveur et le mobile (modèle biométrique issu d'une photo du visage, des empreintes ou de l'iris, ou plus simplement un code d'accès partagé entre le service provider et l'utilisateur final).

Il faut noter que la demande d'éligibilité technique peut se faire par une connexion directe du téléphone mobile 1 vers le serveur 30 sans passer par le premier serveur de confiance 10. Par exemple, le téléphone mobile 1 demande directement à l'opérateur s'il est éligible pour un type de création de domaine sécurisé qui lui aura été décrit dans l'acceptation de l'éligibilité bancaire. Cela permet de simplifier les flux car le programme gestionnaire SEI-TSM n'apporte alors aucune plus-value, les données utilisées pour la demande d'éligibilité technique étant stockées par l'opérateur lui-même.

Le procédé peut comprendre l'étape, à la fin d'au moins un des échanges de données, de faire envoyer par le programme d'appel un message à un superviseur pour rendre compte du bon déroulement de l'échange de données en question. Par exemple, après réception de la clé d'accès, un tel message peut être envoyé par le programme d'appel au serveur du propriétaire de l'élément sécurisé.

L'autorisation d'installation peut être demandée directement par le programme d'appel ou via l'élément sécurisé.

La facturation du service de mise à disposition d'un emplacement dans l'élément sécurisé peut se faire au moment de l'envoi de la clef d'accès. En effet à ce moment-là le premier serveur de confiance a terminé ses travaux.

On notera que le deuxième échange de données peut être utilisé pour créer au moins deux domaines sécurisés dans l'élément sécurisé. Le programme d'appel a pu demander consécutivement, à peu d'intervalle, l'installation de deux applications de deux fournisseurs d'applications différents. On profite alors du canal de communication privée établi entre le programme d'appel et le premier serveur de confiance pour demander la création des deux domaines sécurisés et l'envoi d'une ou deux clés d'accès au programme d'appel qui renverra la ou les clés d'accès au deuxième serveur de confiance.

## Revendications

1. Procédé de déploiement d'une application dans un élément sécurisé d'un terminal de communication comportant une unité de traitement non sécurisé exécutant un programme d'appel des applications de l'élément sécurisé ; le procédé comprenant l'étape de transférer via au moins un réseau de communication des données entre un premier serveur de confiance associé à un fournisseur de l'élément sécurisé pour exécuter un premier programme de gestion de l'élément de sécurité, un deuxième serveur de confiance associé à au moins un fournisseur d'applications pour exécuter un programme de gestion d'applications de l'élément sécurisé, et le terminal de communication, pour créer dans l'élément sécurisé un domaine sécurisé et y installer l'application ; **caractérisé en ce que** le procédé comprend les étapes de :
- établir un premier échange de données entre le fournisseur d'applications et le programme d'appel pour obtenir une autorisation d'installation d'application ;
et, si l'installation est autorisée,
- établir un deuxième échange de données entre le premier programme de gestion et le programme d'appel pour créer le domaine sécurisé dans l'élément sécurisé et transférer au programme d'appel une clé d'accès au domaine sécurisé,
- établir un troisième échange de données entre le deuxième programme de gestion et le programme d'appel pour transférer la clé d'accès au deuxième programme de gestion et faire télécharger et installer l'application dans le domaine sécurisé par le deuxième programme de gestion,
- faire chiffrer par le premier programme de gestion, avant de la transférer au programme d'appel, la clé d'accès au domaine sécurisé avec une clé intermédiaire de chiffrement connue du deuxième programme de gestion ou faire modifier la clé d'accès au domaine sécurisé par le deuxième programme de gestion dès réception de la clé, de manière à interdire l'utilisation de la clé d'accès par un autre que le deuxième programme de gestion juste après que le deuxième programme gestionnaire soit entré en possession de celle-ci avant le téléchargement de l'application dans le domaine sécurisé.

2. Procédé selon la revendication 1, comprenant l'étape, à la fin d'au moins un des échanges de données, de faire envoyer par le programme d'appel un message à un superviseur pour rendre compte du bon déroulement de l'échange de données en question.

3. Procédé selon l'une quelconques des revendications précédentes, dans lequel le deuxième échange de données est utilisé pour créer au moins deux domaines sécurisés dans l'élément sécurisé.

## Patentansprüche

1. Verfahren zur Bereitstellung einer Anwendung in einem sicheren Element eines Kommunikationsendgeräts, das eine nicht sichere Verarbeitungseinheit enthält, die ein Aufrufprogramm der Anwendungen des sicheren Elements ausführt; wobei das Verfahren den Schritt der Übertragung der Daten über mindestens ein Kommunikationsnetzwerk zwischen einem ersten vertrauenswürdigen Server, der einem Anbieter des sicheren Elements zugeordnet ist, um ein erstes Verwaltungsprogramm des Sicherheitselements auszuführen, einem zweiten vertrauenswürdigen Server, der mindestens einem Anbieter von Anwendungen zugeordnet ist, um ein Verwaltungsprogramm von Anwendungen des sicheren Elements auszuführen, und dem Kommunikationsendgerät enthält, um im sicheren Element einen sicheren Bereich zu erzeugen und dort die Anwendung zu installieren; **dadurch gekennzeichnet, dass** das Verfahren die Schritte enthält:
- einen ersten Datenaustausch zwischen dem Anwendungsanbieter und dem Aufrufprogramm aufzubauen, um eine Genehmigung zur Anwendungsinstallation zu erhalten;
und, wenn die Installation genehmigt ist,
- einen zweiten Datenaustausch zwischen dem ersten Verwaltungsprogramm und dem Aufrufprogramm aufzubauen, um den sicheren Bereich im sicheren Element zu erzeugen und einen Zugangsschlüssel zum sicheren Bereich an das Aufrufprogramm zu übertragen,
- einen dritten Datenaustausch zwischen dem zweiten Verwaltungsprogramm und dem Aufrufprogramm aufzubauen, um den Zugangsschlüssel zum zweiten Verwaltungsprogramm zu übertragen und vom zweiten Verwaltungsprogramm die Anwendung herunterladen und im sicheren Bereich installieren zu lassen,
- ehe er an das Aufrufprogramm übertragen wird, den Zugangsschlüssel zum sicheren Bereich durch das erste Verwaltungsprogramm mit einem dem zweiten Verwaltungsprogramm bekannten Verschlüsselungszwischenschlüssel verschlüsseln zu lassen, oder den Zugangsschlüssel zum sicheren Bereich sofort nach Empfang des Schlüssels durch das zweite Verwaltungsprogramm ändern zu lassen, um die Verwendung des Zugangsschlüssels durch ein anderes als das zweite Verwaltungsprogramm zu verbieten gleich nachdem das zweite Verwaltungsprogramm in dessen Besitz gelangt ist, vor dem Herunterladen der Anwendung in den sicheren Bereich.

2. Verfahren nach Anspruch 1, das am Ende mindestens eines der Datenaustauschvorgänge den Schritt enthält, durch das Aufrufprogramm eine Nachricht an einen Supervisor senden zu lassen, um über den korrekten Ablauf des betreffenden Datenaustauschs zu berichten.

3. Verfahren nach einem der vorhergehenden Ansprüche, wobei der zweite Datenaustausch verwendet wird, um mindestens zwei sichere Bereiche im sicheren Element zu erzeugen.

## Claims

1. Method for deploying an application in a secure element of a communication terminal comprising a non-secure processing unit executing a program for calling the applications of the secure element; the method comprising the step of transferring, via at least one communication network, data between a first trusted server associated with a provider of the secure element so as to execute a first program for managing the security element, a second trusted server associated with at least one applications provider so as to execute a program for managing applications of the secure element, and the communication terminal, so as to create, in the secure element, a secure domain and install the application therein; **characterized in that** the method comprises the steps of:
- establishing a first exchange of data between the applications provider and the calling program so as to obtain an application installation authorization;
and, if the installation is authorized,
- establishing a second exchange of data between the first management program and the calling program so as to create the secure domain in the secure element and transfer a key for access to the secure domain to the calling program,
- establishing a third exchange of data between the second management program and the calling program so as to transfer the access key to the second management program and have the second management program download and install the application in the secure domain,
- having the first management program, before transferring it to the calling program, encrypt the key for access to the secure domain with an intermediate encryption key known to the second management program or having the second management program modify the key for access to the secure domain as soon as the key is received, so as to prohibit the use of the access key by any other than the second management program just after the second manager program has taken possession of the key before the downloading of the application into the secure domain.

2. Method according to Claim 1, comprising the step, at the end of at least one of the exchanges of data, of having the calling program send a message to a supervisor to report on the proper progress of the exchange of data in question.

3. Method according to either one of the preceding claims, in which the second exchange of data is used to create at least two secure domains in the secure element.
